## Europäisches Patentamt

## European Patent Office

## Office européen des brevets

(19)

(11) Numéro de publication: **0 123 002 B1**

(12) **FASCICULE DE BREVET EUROPEEN**

(45) Date de publication du fascicule du brevet: **07.01.88**

(51) Int. Cl.⁴: **F 02 P 5/04**

(21) Numéro de dépôt: **83402561.1**

(22) Date de dépôt: **30.12.83**

(54) **Procédé de stabilisation de la vitesse de rotation à vide d'un moteur à allumage commandé.**

(30) Priorité: **30.12.82 FR 8222146**

(43) Date de publication de la demande:
**31.10.84 Bulletin 84/44**

(45) Mention de la délivrance du brevet:
**07.01.88 Bulletin 88/1**

(84) Etats contractants désignés:
**DE GB IT NL SE**

(56) Documents cités:
**EP - A - 0 046 305**
**FR - A - 2 427 477**
**FR - A - 2 454 526**
**GB - A - 2 065 767**

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Boccadoro, Yves, 14, Domaine de la
Pommeraie, F-78810 Feucherolles (FR)**
Inventeur: **Chastagner, Paul, 10, rue des Saules,
F-78340 Les Clayes Sous Bois (FR)**

## Description

La présente invention concerne un procédé de stabilisation de la vitesse de rotation à vide d'un moteur à combustion interne à allumage commandé pour véhicule automobile.

Il est connu de réguler la vitesse de ralenti de ce type de moteur en la maintenant aussi proche que possible d'une valeur de consigne et en l'y ramenant rapidement lorsqu'elle s'en écarte sous l'effet d'une perturbation extérieure (variation de richesse, d'avance, lâcher de pied, sollicitation de la direction assistée, etc....). Pour cela, on intervient par des moyens appropriés sur la quantité d'air admis dans le collecteur d'admission, comme décrit par exemple dans le brevet français 2 532 686.

Toutefois, au ralenti, ce type de moteur est le siège de phénomènes de pompage dus à de mauvaises combustions se traduisant par des variations instantanées importantes de la vitesse de ralenti. Les contraintes liées aux mesures prises pour lutter contre la pollution conjuguées à la recherche d'économies d'énergie ont encore aggravé ce problème en imposant des richesses de fonctionnement voisines du rapport stoechiométrique qui donnent lieu à des phénomènes perturbateurs (dispersion des vitesses de propagation de flammes, créneaux de richesse dus aux sondes à oxygène, etc....).

Il peut en résulter des oscillations du régime d'assez grande amplitude qu'une régulation de vitesse de ralenti par asservissement à une vitesse de consigne n'est pas en mesure de supprimer.

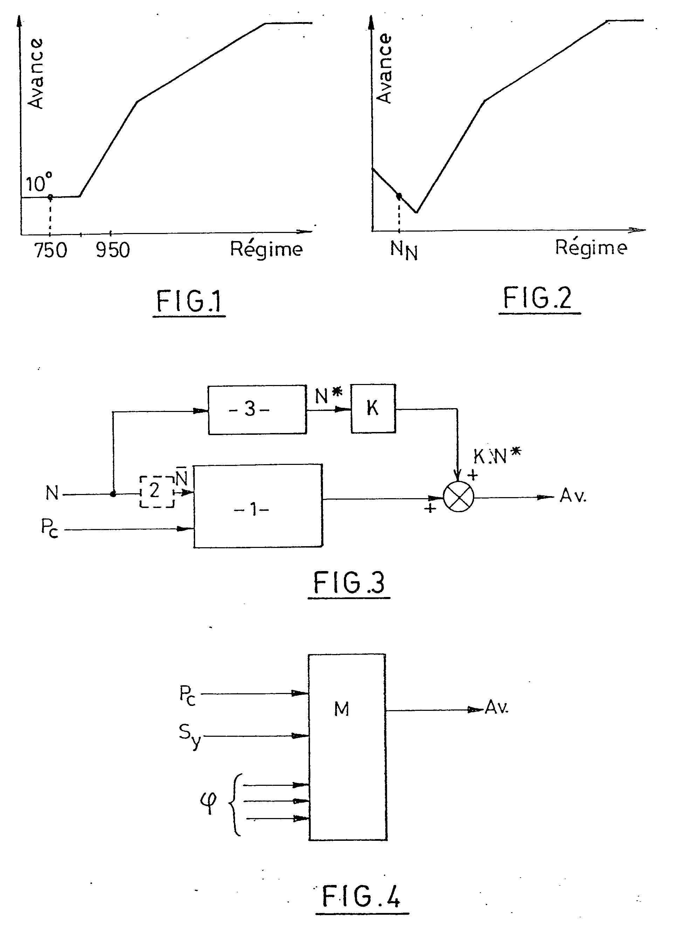

Par contre, il est connu d'intervenir sur l'angle d'avance à l'allumage pour tendre à stabiliser le régime de ralenti et supprimer les oscillations précitées. La Fig. 1 des dessins annexés montre une loi classique d'avance à l'allumage en fonction du régime suivant laquelle l'avance est constante sur la plage d'évolution du régime de ralenti. Une telle loi d'avance à l'allumage est décrite dans la demande de brevet français d'invention 2 454 526 ayant pour objet un procédé et appareil pour la commande du déclenchement d'étincelle dans un système d'allumage pendant le fonctionnement à vide du moteur.

Une amélioration représentée à la Fig. 2 consiste à ménager une loi d'avance ayant une pente négative sur la plage d'évolution du régime de ralenti, toute augmentation du régime de ralenti à être compensée par une diminution de l'avance. Toutefois, à un régime légèrement supérieur à celui du ralenti nominal (ralenti accéléré à froid par exemple), il existe une pente positive d'avance fortement déstabilisante puisque les variations de régime tendent à être amplifiées.

L'invention vise à fournir un procédé de stabilisation de la vitesse de rotation à vide d'un moteur à combustion interne à allumage commandé qui soit basé sur une manipulation de l'angle d'avance à l'allumage tout en évitant les graves inconvénients de la solution précitée et la nécessité de faire référence à un régime de consigne.

A cet effet, l'invention a pour objet un procédé de stabilisation de la vitesse de rotation à vide d'un moteur à combustion interne à allumage commandé pour véhicule automobile, suivant lequel on détermine l'angle d'avance à l'allumage à engendrer en fonction de paramètres de fonctionnement du moteur comprenant sa vitesse de rotation et la pression régnant dans le collecteur d'admission, caractérisé en ce que, à chaque cycle de détermination de l'angle d'avance à l'allumage, on détermine si le moteur est en fonctionnement à vide et en ce que, dans l'affirmative, on détermine un terme correctif d'avance dynamique proportionnel au régime instantané du moteur vu à travers un filtre passe-haut (N*) et on engendre un angle d'avance à l'allumage (Av) égal à la somme algébrique du terme correctif (C) et d'une avance statique (Avs) déterminée en fonction des paramètres de fonctionnement du moteur comprenant sa vitesse de rotation et la pression régnant au collecteur d'admission.

D'autres caractéristiques et avantages de l'invention ressortiront de la description qui va suivre d'un exemple de sa réalisation illustré par les dessins annexés sur lesquels:

- la Fig. 1 est un graphique montrant une loi classique d'avance à l'allumage en fonction du régime pour un moteur à allumage commandé;
- la Fig. 2 est un graphique analogue à celui de la Fig. 1 illustrant une solution de la technique antérieure pour stabiliser le régime de ralenti;
- la Fig. 3 est un schéma fonctionnel illustrant le procédé de stabilisation suivant l'invention;
- la Fig. 4 montre les entrées/sorties d'un microprocesseur pour la mise en œuvre du procédé de stabilisation dans le cas d'un allumage numérique;
- la Fig. 5 est un organigramme de fonctionnement du calculateur de la Fig. 4 pour la mise en œuvre du procédé suivant l'invention;
- la Fig. 6 est un chronogramme montrant les oscillations de la vitesse de ralenti d'un moteur à allumage commandé en fonction du temps, respectivement sans et avec stabilisation par modification de l'avance à l'allumage; et,
- la Fig. 7 est un chronogramme montrant les variations de la vitesse de rotation à vide d'un moteur à allumage commandé en réponse à une variation brusque de couple respectivement sans et avec stabilisation par modification de l'avance à l'allumage.

La stabilisation de la vitesse de rotation à vide, objet de la présente invention, a pour rôle d'atténuer autant que faire se peut les instabilités et pompages du moteur à vide et doit être distinguée d'une régulation de régime de ralenti qui règle la vitesse moyenne par référence à une valeur de consigne.

En se référant à la Fig. 3, le schéma fonctionnel représenté permet d'expliciter sous forme simplifiée le procédé de stabilisation du régime de ralenti suivant l'invention. Un bloc 1 élabore l'angle d'avance à l'allumage, par exemple en terme de temps de conduction de la bobine, à partir des paramètres constitués par la pression Pc dans le collecteur d'admission du moteur et la vitesse de rotation N du moteur, éventuellement filtrée dans un filtre passe-bas 2 produisant une composante N de la vitesse. Le bloc 1 produit à sa sortie un signal Avs représentant l'avance statique élaborée en fonction de Pc et N (ou $\overline{N}$).

Le signal de vitesse N est également filtré par un filtre passe-haut 3 dont la sortie N*, amplifiée en 4 avec un gain K, est ajoutée algébriquement à l'avance Avs. Le système produit donc en sortie une avance Av = Avs + K.N*, somme de l'avance «statique» Avs et d'une avance «dynamique» K.N*.

La Fig. 4 montre un microcalculateur M qui permet de mettre en œuvre ce procédé. Il reçoit à l'une de ses entrées l'information pression Pc dans le collecteur d'admission et à une autre de ses entrées un signal de synchronisation Sy à partir duquel il calcule la vitesse instantanée de rotation du moteur et qui lui permet d'identifier le passage de chaque cylindre par une position prédéterminée, par exemple le point mort haut (PMH). A partir des informations régime et pression, le microcalculateur M peut adresser des tables de valeurs mémorisées et calculer l'angle d'avance à l'allumage Av suivant n'importe quel algorithme classique approprié. Un tel système d'élaboration de l'angle d'avance à l'allumage est tout à fait classique et l'on pourra se reporter à la demande de brevet français 8 213 996 qui en donne un exemple de réalisation.

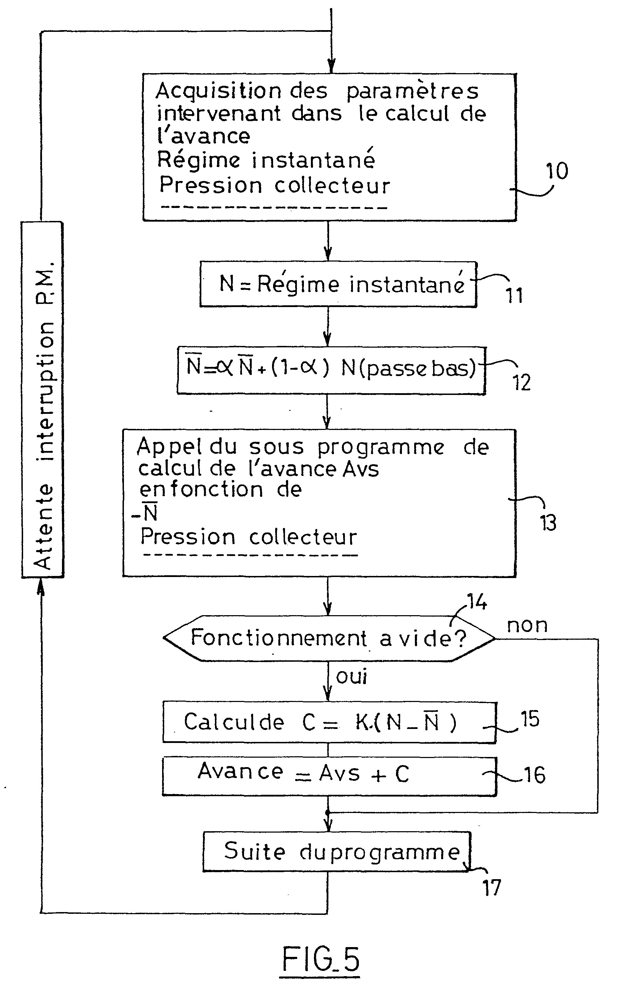

L'organigramme de la Fig. 5 indique les étapes du programme permettant de mettre en œuvre le procédé de stabilisation du régime de ralenti au moyen du microcalculateur M:

– étape 10: on fait, à chaque détection du signal de synchronisation Sy, l'acquisition des paramètres d'entrée, à savoir pression Pc au collecteur d'admission et régime instantané du moteur (lequel est calculé à partir du signal de synchronisation Sy) et éventuellement des autres paramètres φ pouvant intervenir dans le calcul de l'angle d'avance à l'allumage;
– étape 11: on fait N = régime instantané;
– étape 12: on calcule $\overline{N}$, qui représente le filtrage de N à travers un filtre passe-bas; on sait que, sous forme échantillonnée, l'équation d'un filtrage passe-haut s'écrit:

$$N^*_{(n)} = \alpha N^*_{(n-1)} + \alpha \left[ N_{(n)} - N_{(n-1)} \right] \qquad (1)$$

dans lequel

$$\alpha = e - \frac{\Delta T}{\tau},$$

τ étant la constante de temps de filtrage et ΔT le temps séparant deux échantillonnages successifs de la vitesse. On sait par ailleurs que, sous forme de transformée de Laplace, N* s'exprime en fonction de N de la manière suivante:

$$\alpha N^* = \frac{\tau P}{1 + \tau P} \cdot \alpha N$$

$$= \left( 1 - \frac{1}{1 + \tau P} \right) \alpha N.$$

$$= \alpha N - \frac{\alpha N}{1 + \tau P}$$

Or, $\dfrac{1}{1 + \tau P}$

représente le filtrage de N à travers un filtre passe-bas, c'est-à-dire $\overline{N}$. Par conséquent:

$$\alpha N^* = \alpha N - \alpha \overline{N}$$

et

$$N^* = N - \overline{N}$$

En remplaçant N* dans (1), on obtient:

$$N_{(n)} - \overline{N}_{(n)} = \alpha \cdot \overline{N}_{(n-1)} + (1 - \alpha) N_{(n)}$$

soit:

$$\overline{N}_{(n)} = \alpha \cdot \overline{N}_{(n-1)} + (1 - \alpha) N_{(n)} \qquad (2)$$

N est donc exprimé en fonction de N (calculé à l'étape 10), $\overline{N}$ (calculé au cycle précédent de calcul) et α qui peut être soit une constante de valeur prédéterminée, soit une fonction de Pc, de N, de la température du liquide de refroidissement ou autres paramètres.
– étape 13: elle consiste à appeler le sous-programme classique de calcul de l'angle d'avance à l'allumage en fonction du régime, de la pression et d'autres paramètres éventuels; toutefois, on utilise de préférence comme paramètre régime la valeur filtrée $\overline{N}$, ce qui permet de s'affranchir, pour le calcul de l'avance statique, des variations instantanées de régime qu'il s'agit précisément de compenser; on obtient à la fin de ce sous-programme une valeur d'avance, ci-après appelée avance statique Avs;
– étape 14: il s'agit d'un test pour déterminer si les conditions sont telles que le moteur peut être considéré comme étant en fonctionnement à vide. De préférence, ce test porte sur l'état (fermeture ou ouverture) d'un contact de pied-levé, mais d'autres paramètres peuvent être pris en compte, par exemple la valeur de la pression Pc au collecteur d'admission comparée à une valeur de seuil:
si la réponse à ce test est NON, on passe à l'étape 17 «suite du programme» qui peut consister, par exemple, à calculer le temps de conduction de la bobine;

si la réponse à ce test est OUI, on passe à l'étape 15;

– étape 15: on calcule un terme correctif C = K (N – N̄) qui représente la partie dynamique de l'avance dont la partie statique Avs a été calculée à l'étape 13; K est un coefficient négatif qui peut être soit constant, soit variable en fonction notamment du régime instantané N ou du régime filtré N̄, de la pression Pc, de la température du liquide de refroidissement du moteur ou encore d'autres paramètres de fonctionnement du moteur.

– étape 16: on calcule l'angle d'avance à l'allumage à engendrer, qui est la somme algébrique des parties statique Avs et dynamique C de l'avance:

$$Av = Avs + C$$

– étape 17: il s'agit du déroulement précité de la suite du programme jusqu'à l'interruption suivante qui déclenche un nouveau cycle de calcul.

Comme cela ressort de ce qui précède, l'avance dynamique est une fonction directe de N* (puisque N* = N – N̄), c'est-à-dire du régime instantané filtré à travers un filtre passe-haut.

Le procédé de stabilisation décrit présente entre autres avantages de ne pas nécessiter la connaissance d'un régime de consigne et d'être actif dès qu'il existe des variations de régime dues, par exemple, à la mise en service d'organes extérieurs du véhicule tels que motoventilateur, dispositif de climatisation, direction assistée, etc. ... De plus, il est d'autant plus actif que ces variations sont rapides. A cet effet, il est possible de jouer sur les valeurs de α et de K: par exemple, si l'on choisit α constant, la constante de temps τ évoluera comme ΔT, c'est-à-dire sera d'autant plus petite que le régime N croîtra.

On notera également que la stabilisation de régime est également active en décélération à vide en favorisant le freinage-moteur et en empêchant l'inconvénient rencontré fréquemment de calage du moteur lorsque la direction assistée est braquée à fond en décélération à vide.

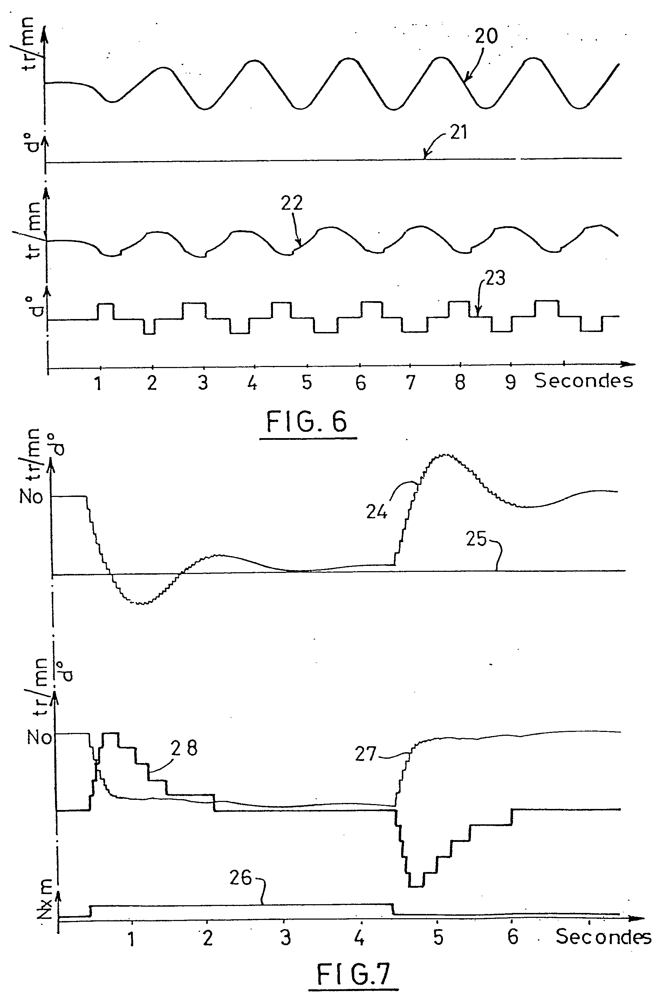

Les Fig. 6 et 7 montrent clairement l'efficacité du procédé de stabilisation décrit précédemment.

Sur la Fig. 6, la courbe 20 représente les oscillations de la vitesse de rotation (tr/min) au ralenti d'un moteur dont l'avance à l'allumage, représentée par la droite 21, est constante. La courbe 22 représente, dans les mêmes conditions de fonctionnement du moteur, les oscillations du régime de ralenti que présente ce moteur lorsque son avance à l'allumage (courbe 23) est modifiée conformément au procédé de stabilisation suivant l'invention. On constate que les oscillations de la courbe 22 sont notablement plus amorties que celles de la courbe 20.

Sur la Fig. 7, la courbe 24 représente l'évolution, en réponse à une variation brusque de couple résistant (courbe 26), du régime de rotation à vide, à partir d'une vitesse No, d'un moteur fonctionnant avec une avance à l'allumage constante (courbe 25). La courbe 27 montre l'évolution de vitesse obtenue dans les mêmes conditionnements de fonctionnement du moteur, mais en faisant varier l'angle d'avance à l'allumage de celui-ci (courbe 28) de la manière décrite dans la présente demande. Là encore, l'influence favorable de la stabilisation par modification de l'avance à l'allumage apparaît très clairement.

Bien entendu, de nombreuses modifications peuvent être apportées à l'exemple décrit sans sortir du cadre de l'invention. C'est ainsi, par exemple, que lorsque le contact de «pied-levé» est ouvert, l'avance peut, en variante, être calculée en fonction du régime instantané N (au lieu de N̄). A cet effet, le test 14 sur l'état du contact de «pied-levé» peut être effectué immédiatement après l'étape 10. En cas d'ouverture (réponse NON), on calcule alors directement l'avance Av en fonction du régime instantané N et de la pression Pc, ce qui évite le calcul de N̄. En cas de fermeture (réponse OUI), il y a déroulement des étapes 11, 12, 13, 15 et 16.

## Revendications

1. Procédé de stabilisation de la vitesse de rotation à vide d'un moteur à combustion interne à allumage commandé pour véhicule automobile, suivant lequel, d'une part, on détermine l'angle d'avance à l'allumage à engendrer en fonction des paramètres de fonctionnement du moteur comprenant sa vitesse de rotation et la pression régnant dans le collecteur d'admission et, d'autre part, on détermine, à chaque cycle de calcul de l'angle d'avance à l'allumage, si le moteur est en fonctionnement à vide, caractérisé en ce que, lorsque le moteur est en fonctionnement à vide, on détermine un terme correctif d'avance dynamique proportionnel à la vitesse instantanée de rotation du moteur filtrée par un filtre passe-haut (N*), et on engendre un angle d'avance à l'allumage (Av) égal à la somme algébrique du terme correctif (C) et d'une avance statique (Avs) déterminée en fonction des paramètres de fonctionnement du moteur comprenant sa vitesse de rotation et la pression régnant au collecteur d'admission.

2. Procédé suivant la revendication 1, dans lequel on détermine par calcul numérique l'avance statique (Avs) en fonction de la vitesse de rotation du moteur et de la pression, caractérisé en ce que l'on calcule numériquement une valeur filtrée N̄ représentant la vitesse instantanée de rotation N du moteur filtrée par un filtre passe-bas, et en ce que le terme correctif d'avance dynamique a pour valeur C = K (N – N̄), dans lequel K est un coefficient négatif.

3. Procédé suivant la revendication 2, caractérisé en ce que:

$$\overline{N}_{(n)} = \alpha \, \overline{N}_{(n-1)} + (1 - \alpha) \, N_{(n)}$$

dans lequel:

- $\overline{N}_{(n)}$ est la valeur filtrée à calculer
- $\overline{N}_{(n-1)}$ est la valeur filtrée calculée au cycle de calcul précédent n–1
- $N_{(n)}$ est la dernière vitesse de rotation du moteur calculée et,
- $\alpha$ est un coefficient de la forme e

$$- \frac{\Delta T}{\tau}$$

où:

$\Delta T$ est le temps séparant deux échantillonnages successifs de la vitesse N,

et:

$\tau$ est la constante de temps de filtrage.

4. Procédé suivant la revendication 3, caractérisé en ce que l'un au moins des coefficients K et $\alpha$ est une constante.

5. Procédé suivant l'une quelconque des revendications 3 et 4, caractérisé en ce que l'un au moins des coefficients K et $\alpha$ est une fonction de la vitesse de rotation du moteur et/ou de la pression et/ou de la température du liquide de refroidissement du moteur.

6. Procédé suivant l'une quelconque des revendications 2 à 5, caractérisé en ce que ladite avance statique Avs est calculée en fonction de la valeur filtrée $\overline{N}$ de la vitesse instantanée et de la pression Pc.

7. Procédé selon la revendication 6, caractérisé en ce que, en cas d'absence de détection de fonctionnement à vide du moteur, l'angle d'avance à l'allumage engendré Av est ladite avance statique Avs calculée en fonction de la valeur filtrée $\overline{N}$ de la vitesse de rotation et de la pression Pc.

8. Procédé selon la revendication 6, caractérisé en ce que, en cas d'absence de détection de fonctionnement à vide du moteur, l'angle d'avance à l'allumage engendré est calculé, comme connu en soi, en fonction de la vitesse instantanée de rotation N du moteur et de la pression Pc.

9. Procédé selon l'une quelconque des revendications 1 à 8, caractérisé en ce que l'on détermine si le moteur est en fonctionnement à vide à partir de l'état (ouvert-fermé) d'un contact de «pied-levé».

10. Procédé selon l'une quelconque des revendications 1 à 8, caractérisé en ce que l'on détermine si le moteur est en fonctionnement à vide par comparaison de la valeur de la pression (Pc) au collecteur d'admission à une valeur de seuil.

**Patentansprüche**

1. Verfahren zur Stabilisierung der Leerlaufdrehzahl einer Brennkraftmaschine für ein Kraftfahrzeug, bei dem einerseits der einzustellende Vorzündungswinkel als Funktion der Betriebsparameter des Motors bestimmt wird, die seine Rotationsgeschwindigkeit und den Druck umfassen, der im Einlassstutzen herrscht und andererseits während jedes Berechnungszyklus des Vorzündungswinkels festgestellt wird, ob der Motor sich im Leerlauf befindet, dadurch gekennzeichnet, dass, wenn sich der Motor im Leerlauf befindet, ein dynamischer Korrekturfaktor für die Vorzündung bestimmt wird, der proportional zur momentanen Rotationsgeschwindigkeit des Motors ist und durch ein Hochpassfilter (N*) gefiltert ist und dass ein Vorzündungswinkel (Av) eingestellt wird, der gleich der algebraischen Summe des Korrekturfaktors (C) und einer statischen Vorzündung (Avs) ist, die als Funktion der Betriebsparameter des Motors bestimmt wird, welche seine Rotationsgeschwindigkeit und den im Einlassstutzen herrschenden Druck umfassen.

2. Verfahren nach Anspruch 1, bei dem durch numerische Rechnung die statische Vorzündung (Avs) als Funktion der Rotationsgeschwindigkeit des Motors und des Drucks bestimmt wird, dadurch gekennzeichnet, dass numerisch ein gefilterter Wert ($\overline{N}$) berechnet wird, der die augenblickliche Rotationsgeschwindigkeit (N) des Motors darstellt und durch ein Tiefpassfilter gefiltert wird und dass der Korrekturfaktor der dynamischen Vorzündung den Wert $C = K\,(N-\overline{N})$ aufweist, wobei K ein negativer Koeffizient ist.

3. Verfahren nach Anspruch 2, dadurch gekennzeichnet, dass

$$\overline{N}_{(n)} = \alpha\,\overline{N}_{(n-1)} + (1 - \alpha)\,N_{(n)}$$

in der
- $\overline{N}_{(n)}$ der zu berechnende gefilterte Wert ist,
- $\overline{N}_{(n-1)}$ der berechnete gefilterte Wert während des vorhergehenden Berechnungszyklus n–1 ist,
- $N_{(n)}$ die letzte berechnete Rotationsgeschwindigkeit des Motors ist und
- $\alpha$ ein Koeffizient der Form e

$$\frac{-\Delta T}{\tau}$$

ist, wobei:

$\Delta T$ die Trennzeit zwischen zwei aufeinanderfolgenden Messungen der Geschwindigkeit N ist, und:

$\tau$ die Zeitkonstante der Filterung ist.

4. Verfahren nach Anspruch 3, dadurch gekennzeichnet, dass wenigstens einer der Koeffizienten K und $\alpha$ eine Konstante ist.

5. Verfahren nach einem der Ansprüche 3 und 4, dadurch gekennzeichnet, dass wenigstens einer der Koeffizienten K und $\alpha$ eine Funktion der Rotationsgeschwindigkeit des Motors und/oder des Drucks und/oder der Temperatur der Kühlflüssigkeit des Motors ist.

6. Verfahren nach einem der Ansprüche 2 bis 5, dadurch gekennzeichnet, dass die statische Vorzündung Avs als Funktion des gefilterten Wertes $\overline{N}$ der Augenblicksgeschwindigkeit und des Drucks Pc berechnet wird.

7. Verfahren nach Anspruch 6, dadurch gekennzeichnet, dass im Falle der Abwesenheit einer Messung des Motorleerlaufes der erzeugte Vorzündungswinkel Av die berechnete statische Vorzündung Avs als Funktion des gefilterten Wertes $\overline{N}$ der Rotationsgeschwindigkeit und des Drucks PC ist.

8. Verfahren nach Anspruch 6, dadurch gekennzeichnet, dass im Falle der Abwesenheit einer Messung des Motorleerlaufes der erzeugte Vorzündungswinkel in an sich bekannter Weise berechnet wird als Funktion der augenblicklichen Rotationsgeschwindigkeit N des Motors und des Drucks Pc.

9. Verfahren nach einem der Ansprüche 1 bis 8, dadurch gekennzeichnet, dass festgestellt wird, ob der Motor sich im Leerlauf befindet, ausgehend von einem Zustand (offen–zu) eines Fusshebelschalters.

10. Verfahren nach einem der Ansprüche 1 bis 8, dadurch gekennzeichnet, dass man feststellt, ob der Motor sich im Leerlauf befindet durch Vergleich des Druckwertes Pc im Einlassstutzen mit einem Schwellwert.

## Claims

1. A process for stabilising the speed of rotation under a no-load condition of an internal combustion engine with controlled ignition for a motor vehicle, comprising on the one hand determining the ignition advance angle to be produced in dependence on the operating parameters of the engine comprising the speed of rotation thereof and the pressure obtaining in the intake manifold and on the other hand determining in each ignition advance angle calculation cycle, if the engine is operating under no load, characterised in that, when the engine is operating under no load, there is determined a corrective dynamic advance term proportional to the instantaneous speed of rotation of the engine filtered by a high pass filter (N*) and there is produced an ignition advance angle (Av) equal to the algebraic sum of the corrective term (C) and a static advance (Avs) which is determined in dependence on the operating parameters of the engine comprising the speed of rotation thereof and the pressure obtaining in the intake manifold.

2. A process according to claim 1 wherein the static advance (Avs) is determined, by numerical calculation, in dependence on the speed of rotation of the engine and the pressure, characterised in that a filtered value $\overline{N}$ representing the instantaneous speed of rotation N of the engine, filtered by a low pass filter, is numerically calculated, and that the value of the corrective dynamic advance term is $C = K (N-\overline{N})$ wherein K is a negative coefficient.

3. A process according to claim 2 characterised in that:

$$\overline{N}_{(n)} = \alpha \, \overline{N}_{(n-1)} + (1 - \alpha) \, N_{(n)}$$

wherein:

− $\overline{N}_{(n)}$ is the filtered value to be calculated
− $\overline{N}_{(n-1)}$ is the filtered value calculated in the preceding calculation cycle n−1
− $N_{(n)}$ is the last calculated speed of rotation of the engine, and
− $\alpha$ is a coefficient of the form e

$$\frac{-\Delta T}{\tau}$$

wherein:
$\Delta T$ is the time between two successive samplings of the speed N, and
$\tau$ is the filtering time constant.

4. A process according to claim 3 characterised in that one at least of the coefficients K and $\alpha$ is a constant.

5. A process according to either one of claims 3 and 4 characterised in that one at least of the coefficient K and $\alpha$ is a function of the speed of rotation of the engine and/or the pressure and/or the temperature of the cooling liquid of the engine.

6. A process according to any one of claims 2 to 5 characterised in that said static advance Avs is calculated in dependence on the filtered value $\overline{N}$ of the instantaneous speed and the pressure Pc.

7. A process according to claim 6 characterised in that, in the event of absence of detection of the engine operating under no load, the ignition advance angle Av produced is said static advance Avs calculated in dependence on the filtered value $\overline{N}$ of the speed of rotation and the pressure Pc.

8. A process according to claim 6 characterised in that, in the event of absence of detection of the engine operating under no load, the ignition advance angle produced is calculated, as known per se, in dependence on the instantaneous speed of rotation N of the engine and the pressure Pc.

9. A process according to any one of claims 1 to 8 characterised by determining if the engine is operating under a no load condition from the state (open-closed) of a «foot off» switch.

10. A process according to any one of claims 1 to 8 characterised by determining if the engine is operating under a no load condition by comparison of the value of the pressure (Pc) at the intake manifold, to a threshold value.

FIG.1

FIG.2

FIG.3

FIG.4

7

FIG_5

Acquisition des paramètres intervenant dans le calcul de l'avance
Régime instantané
Pression collecteur
— — — — — — — — — — — — — — — — — — 10

$N = $ Régime instantané 11

$\overline{N} = \alpha \overline{N} + (1-\alpha)\, N(\text{passe bas})$ 12

Appel du sous programme de calcul de l'avance Avs en fonction de
$-\overline{N}$
Pression collecteur
— — — — — — — — — — — — — — — — — — 13

Fonctionnement a vide? 14    non

oui

Calcul de $C = K.(N - \overline{N})$ 15

Avance $=$ Avs $+ C$ 16

Suite du programme 17

Attente interruption P.M.

FIG. 6

FIG.7